(19) Europäisches Patentamt
European Patent Office
Office européen des brevets

(11) Publication number: **0 128 046**
**B1**

(12) # EUROPEAN PATENT SPECIFICATION

(45) Date of publication of patent specification: **21.10.87**

(51) Int. Cl.[4]: **C 08 F 10/00,** C 08 F 4/62

(21) Application number: **84303806.8**

(22) Date of filing: **05.06.84**

(54) **Process and catalyst for producing reactor blend polyolefins.**

(30) Priority: **06.06.83 US 501587**

(43) Date of publication of application:
**12.12.84 Bulletin 84/50**

(45) Publication of the grant of the patent:
**21.10.87 Bulletin 87/43**

(84) Designated Contracting States:
**BE DE FR GB IT NL SE**

(56) References cited:
**EP-A-0 035 242**
**EP-A-0 069 951**
**GB-A- 978 893**

(73) Proprietor: **Exxon Research and Engineering Company**
**P.O.Box 390 180 Park Avenue**
**Florham Park New Jersey 07932 (US)**

(72) Inventor: **Ewen, John Alexander**
**16615 Kentwood**
**Houston Texas (US)**
Inventor: **Welborn, Howard Curtis, Jr.**
**1502 Driscoll Street**
**Houston Texas (US)**

(74) Representative: **Dew, Melvyn John et al**
**Esso Chemical Ltd. Esso Chemical Research Centre P.O. Box 1**
**Abingdon Oxfordshire, OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 128 046 B1

**Description**

The present invention concerns a catalyst and process for the polymerization of ethylene and alpha-olefins. More particularly, the invention relates to catalysts and a process for producing (co)polyolefin reactor blends of polyethylene and ethylene higher alpha-olefin copolymers. The invention further relates to a process for producing tailored (co)polyolefin reactor blends through the proper selection of the catalysts of this invention.

Reactor blends for purposes of this invention are mixtures of two or more polymers of different physical properties (for example density, melting point, comonomer content) produced simultaneously in a single polymerization reactor. The catalyst employed in the production of such polymer blends under steady state conditions in one reactor will comprise two or more distinct catalyst components, one predominately catalyzing the formation of one polymer, the other predominately catalyzing the formation of the other polymer.

It is known that certain metallocenes such as bis(cyclopentadienyl) titanium and zirconium dialkyls in combination with aluminum alkyl co-catalyst, form homogeneous catalyst systems useful for the polymerization of ethylene. German Patent Application 2,608,863 discloses the use of a catalyst system for the polymerization of ethylene consisting of bis(cyclopentadienyl) titanium dialkyl, aluminum trialkyl and water. German Patent Application 2,608,933 discloses an ethylene polymerization catalyst system consisting of (1) zirconium metallocenes of the general formula $(cyclopentadienyl)_nZrY_{4-n}$, wherein n stands for a number in the range of 1 to 4, Y for R, $CH_2AlR_2$, $CH_2CH_2AlR_2$ and $CH_2CH(AlR_2)_2$ wherein R stands for alkyl or metallo alkyl, (2) an aluminum trialkyl cocatalyst and (3) water.

European Patent Appln. No. 0035242 discloses a process for preparing ethylene and atactic propylene polymers in the presence of a halogen-free Ziegler catalyst system of (1) cyclopentadienyl compound of the formula $(cyclopentadienyl)_nM\ Y_{4-n}$ in which n is an integer from 1 to 4, M is a transition metal, especially zirconium, and Y is either hydrogen, a $C_1$—$C_5$ alkyl or metallo alkyl group or a compound having the following general formula: $CH_2AlR_2$, $CH_2CH_2AlR_2$ and $CH_2CH(AlR_2)_2$ in which R represents a $C_1$—$C_5$ alkyl or metallo alkyl group, and (2) an alumoxane.

The above disclosures demonstrate the usefulness of certain metallocenes in combination with certain aluminum compounds for the polymerization of ethylene and particularly polymerization at a high activity rates. The references neither disclose polyethylene/ethylene-higher alpha-olefin copolymer reactor blends nor methods of producing such reactor blends.

In "Molecular Weight Distribution And Stereoregularity Of Polypropylenes Obtained With $Ti(OC_4H_9)_4$/$Al(C_2H_5)_3$ Catalyst System"; *Polymer*, Pg. 469—471, 1981, Vol. 22, April, Doi, *et al* disclose propylene polymerization with a catalyst which at about 41°C obtains a soluble catalyst and insoluble catalyst fraction, one with "homogeneous catalytic centres" and the other with "heterogeneous catalytic centres". The polymerization at that temperature obtains polypropylene having a bimodal molecular weight distribution.

It is also known to produce polymer blends by polymerizing two or more polymerizable materials in two or more reactors arranged in series. In accordance with such methods, a polymer is produced in a first reactor which first polymer is passed to a second reactor wherein a second polymer is produced thereby obtaining a blend of the first and second polymers.

It is highly desirable to be able to readily and simply produce blends in a single reactor during which polyethylene and ethylene-higher alpha-olefin copolymer are produced simultaneously. Not only is a significant reduction in energy costs obtained, but one obtains a uniform blending of the polymers and one can simply "tailor" the polymers with respect to e.g. molecular weights and weight fraction to obtain blends evidencing outstanding properties.

In view of the foregoing problems, it would be highly desirable to provide a polymerization catalyst system of sufficient activity to produce high quality blends of ethylene-alpha olefin polymers. It is furthermore highly desirable to be able to produce the blends of ethylene-alpha olefin polymers directly in a single reactor.

The present invention provides a process for producing (co)polyolefin reactor blends comprising polyethylene and ethylene-higher alpha-olefin copolymer. The reactor blends are obtained directly during a single polymerization process, i.e., the blends of this invention are obtained in a single reactor by simultaneously polymerizing ethylene and copolymerizing ethylene with an alpha-olefin thereby eliminating expensive blending operations. The invention furthermore provides a catalyst system for the polymerization of ethylene and ethylene copolymers simultaneously to provide polyethylene/ethylene copolymer blends. The process of producing reactor blends in accordance with this invention can be employed in conjunction with other prior art blending techniques, for example the reactor blends produced in a first reactor can be subjected to further blending in a second stage by use of a series of reactors.

Accordingly, there is provided a catalyst system for the polymerization of reactor blends of polyethylene with ethylene-alpha-olefin copolymers; said catalyst system comprising (a) at least two different metallocenes and (b) an alumoxane, the molar ratio of the metallocenes being between 100:1 and 1:100. The metallocenes employed in this invention are organometallic coordination compounds which are cyclopentadienyl derivatives of a transition metal of Groups 4b, 5b and 6b and include mono, di and tricyclopentadienyls and their derivatives of the transition metal. The metallocenes can be represented by the general formula

$$(C_5R'_m)_pR''_s(C_5R'_m)M\ Q_{3-p}$$

or

$$R''_s(C_5R'_m)M\ Q',$$

wherein $(C_5R'_m)$ is a cyclopentadienyl or substituted cyclopentadienyl, each R', which can be the same or different, is hydrogen or a hydrocarbyl radical such as alkyl, alkenyl, aryl, alkylaryl, or arylalkyl radical having from 1 to 20 carbon atoms or two R' substituents together form a fused $C_4$—$C_6$ ring, R'' is a $C_1$—$C_4$ alkylene radical, a dialkyl germanium or silicone, or an alkyl phosphine or amine radical bridging two $(C_5R'_m)$ rings, Q is a hydrocarbon radical such as aryl, alkyl, alkenyl, alkylaryl, or arylalkyl radical having from 1 to 20 carbon atoms or halogen and each Q can be the same or different, Q' is an alkylidene radical having from 1 to about 20 carbon atoms, M is a transition metal of Group 4b, 5b or 6b of the Periodic Table (Chemical Rubber Company's Handbook of Chemistry & Physics, 48th Edition), s is 0 or 1, p is 0, 1 or 2; s=0; when p=0; m is 4 when s is 1 and m is 5 when s is 0.

The ratios of one metallocene to the second metallocene will be a function of both the chemical composition of the metallocenes as well as the blend being tailored; accordingly, the ratio of the two metallocenes can vary greatly within the 1:100 to 100:1 limits and, hence, is limited only for the purpose of producing the blends.

The present invention also provides a process for producing polyolefin reactor blends. The process comprises polymerizing ethylene and higher alpha-olefins in the presence of the catalyst system described above.

The present invention is directed towards a catalytic process for the polymerization of ethylene and one or more higher alpha-olefins to polyethylene/ethylene-higher alpha-olefin copolymer reactor blends. The polymers are intended for fabrication into articles by e.g. extrusion, injection molding, thermoforming or rotational molding. In particular, the polymer blends of this invention are blends of polyethylenes such as high density polyethylene (HDPE) and linear low density polyethylene (LLDPE), with ethylene-higher alpha-olefin copolymer, the alpha-olefins having from 3 to about 10 carbon atoms and preferably 4 to 8 carbon atoms per molecule. Illustrative of the higher alpha-olefins are propylene, butene-1, hexene-1 and octene-1. Preferably, the alpha-olefin is propylene or butene-1.

In the process of the present invention, ethylene, together with the alpha-olefins, is polymerized in the presence of a homogeneous catalyst system comprising at least two different metallocenes and an alumoxane.

The alumoxanes are well known in the art and are polymeric aluminum compounds which can be represented by the general formulae $(R—Al—O)_n$ which is a cyclic compound and $R(R—Al—O—)_nAlR_2$, which is a linear compound. In the general formula R is a $C_1$—$C_5$ alkyl group such as, for example, methyl, ethyl, propyl, butyl and pentyl and n is an integer from 1 to about 20 and preferably from about 1 to about 4. Most preferably, R is methyl and n is 4. Generally, in the preparation of alumoxanes from, for example, aluminum trimethyl and water, a mixture of the linear and cyclic compounds is obtained.

The alumoxane can be prepared in various ways. Preferably, alumoxanes are prepared by contacting water with a solution of aluminum trialkyl, such as, for example, aluminum trimethyl, in a suitable organic solvent such as benzene or an aliphatic hydrocarbon. For example, the aluminum alkyl is treated with water in form of a moist solvent or the aluminum alkyl such as aluminum trimethyl can be desirably contacted with a hydrated salt such as hydrated copper sulfate.

Preferably, the alumoxane is prepared in the presence of a hydrated copper sulfate. The method comprises treating a dilute solution of aluminum trimethyl in, for example, toluene, with copper sulfate represented by the general formula $CuSO_4 \cdot 5H_2O$. The ratio of copper sulfate to aluminum trimethyl is desirably about 1 mole of copper sulfate for 5 moles of aluminum trimethyl. The reaction is evidenced by the evolution of methane.

The dual metallocene system usefully employed in accordance with this invention are the mono, di and tricyclopentadienyl or substituted cyclopentadienyl metallocenes and preferably the titanium (IV) and zirconium (IV) metallocenes. The metallocenes are represented by the general formula

$$(C_5R'_m)_pR''_s(C_5R'_m)M\ Q_{3-p}$$

or

$$R''_s(C_5R'_m)_2M\ Q'$$

wherein $(C_5R'_m)$ is cyclopentadienyl or substituted cyclopentadienyl, each R' is the same or different and is hydrogen or a hydrocarbyl radical such as alkyl, alkenyl, aryl, alkylaryl, or arylalkyl radicals containing from 1 to 20 carbon atoms or two R' substituents are joined together through carbon atoms to form a $C_4$—$C_6$ ring, R'' is a $C_1$—$C_4$ alkylene radical, a dialkyl germanium or silicone, or an alkyl phosphine or amine radical bridging two $(C_5R'_m)$ rings, Q is a hydrocarbyl radical such as aryl, alkyl, alkenyl, alkylaryl, or arylalkyl radical having from 1—20 carbon atoms or halogen and each Q can be the same or different, Q' is an alkylidene radical having from 1 to about 20 carbon atoms, s is 0 or 1, p is 0, 1 or 2; s is 0 when p is 0, m is 4

when s is 1 and m is 5 when s is 0 and M is a Group 4b, 5b or 6b transition metal and most preferably zirconium or titanium.

Exemplary hydrocarbyl radicals are methyl, ethyl, propyl, butyl, amyl, isoamyl, hexyl, isobutyl, heptyl, octyl, nonyl, decyl, cetyl, 2-ethylhexyl and phenyl.

Exemplary alkylene radicals are methylene, ethylene, propylene.

Preferred examples of substituent Q are methyl, phenyl or chloride.

Exemplary halogen atoms include chlorine, bromine and iodine and of these halogen atoms, chlorine is preferred.

Exemplary of the alkylidene radicals are methylidene, ethylidene and propylidene.

Preferably the catalyst comprises at least two zirconocenes or at least one titanocene and at least one zirconocene.

Illustrative but non-limiting examples of the titanocenes which can be usefully employed in accordance with this invention are bis(cyclopentadienyl) titanium diphenyl, the carbene represented by the formula $Cp_2Ti{=}CH_2 \cdot Al(CH_3)_2Cl$, and derivatives of this reagent such as $Cp_2Ti{=}CH_2 \cdot Al(CH_3)_3$, $(Cp_2TiCH_2)_2$,

$$Cp_2\overline{TiCH_2CH(CH_3)CH_2},$$

$Cp_2Ti{=}CHCH_2CH_3$, $Cp_2Ti{=}CH_2 \cdot AlR'''_2Cl$, wherein Cp is a cyclopentadienyl or substituted cyclopentadienyl radical, and R''' is an alkyl, aryl or alkylaryl radical having from 1—18 carbon atoms; substituted bis(Cp)Ti(IV) compounds such as bis(indenyl)Ti diphenyl or dichloride, bis(methylcyclopentadienyl)Ti diphenyl or dihalides and other dihalide complexes; dialkyl, trialkyl, tetra-alkyl and penta-alkyl cyclopentadienyl titanium compounds such as bis(1,2-dimethylcyclopentadienyl)Ti diphenyl or dichloride, bis(fluorenyl)Ti dichloride, bis(1,2-diethylcyclopentadienyl)Ti diphenyl or dichloride and other dihalide complexes; silicon, phosphine, amine or carbon bridged cyclopentadiene complexes, such as dimethyl silyldicyclopentadienyl titanium diphenyl or dichloride, methyl phosphine dicyclopentadienyl titanium diphenyl or dichloride, methylenedicyclopentadienyl titanium diphenyl or dichloride and other dihalide complexes.

Illustrative but non-limiting examples of the zirconocenes which can be usefully employed in accordance with this invention are bis(cyclopentadienyl)zirconium diphenyl, bis(cyclopentadienyl)zirconium dimethyl; the alkyl substituted cyclopentadienes, such as bis(ethylcyclopentadienyl)zirconium dimethyl, bis(β-phenylpropylcyclopentadienyl)zirconium dimethyl, bis(methylcyclopentadienyl)zirconium dimethyl and dihalide complexes of the above; di-alkyl, tri-alkyl, tetra-alkyl, and penta-alkyl cyclopentadienes, such as bis(pentamethylcyclopentadienyl)zirconium dimethyl, bis(1,2-dimethylcyclopentadienyl)zirconium dimethyl, bis(1,3-diethylcyclopentadienyl)zirconium dimethyl and dihalide complexes of the above; silicone, phosphorus, and carbon bridged cyclopentadiene complexes such as dimethylsilyldicyclopentadienyl zirconium dimethyl or dihalide, methylphosphine dicyclopentadienyl zirconium dimethyl or dihalide, and methylene dicyclopentadienyl zirconium dimethyl or dihalide, carbenes represented by the formulae $Cp_2Zr{=}CH_2 \cdot P(C_6H_5)_2CH_3$, and derivatives of these compounds such as

$$Cp_2\underline{ZrCH_2CH(CH_3)CH_2}.$$

The ratio of aluminum in the alumoxane to total metal in the metallocenes can be in the range of 0.5:1 to $10^5$:1, and preferably 5:1 to 1000:1. The molar ratio of the metallocenes can vary over a wide range within the specified limits and in accordance with this invention the molar ratios are controlled by the product polymer blend desired.

The reactivity ratios of the metallocenes in general are obtained by methods well known such as, for example, as described in "Linear Method for Determining Monomer Reactivity Ratios in Copolymerization", M. Fineman and S. D. Ross, J. Polymer Science *5*, 259 (1950) or "*Copolymerization*", F. R. Mayo and C. Walling, Chem. Rev. *46*, 191 (1950). For example, to determine reactivity ratios the most widely used copolymerization model is based on the following equations:

$$M_1^*+M_1 \xrightarrow{k_{11}} M_1^* \quad (1)$$

$$M_1^*+M_2 \xrightarrow{k_{12}} M_2^* \quad (2)$$

$$M_2^*+M_1 \xrightarrow{k_{21}} M_1^* \quad (3)$$

$$M_2^*+M_2 \xrightarrow{k_{22}} M_2^* \quad (4)$$

where $M_i$ refers to a monomer molecule which is arbitrarily designated i (where i=1, 2) and $M_2^*$ refers to a growing polymer chain to which monomer i has most recently attached.

The $k_{ij}$ values are the rate constants for the indicated reactions. Thus, $k_{11}$ represents the rate at which an ethylene unit inserts into a growing polymer chain in which the previously inserted monomer unit was also ethylene. The reactivity rates follow as: $r_1=k_{11}/k_{12}$ and $r_2=k_{22}/k_{21}$ wherein $k_{11}$, $k_{12}$, $k_{22}$ and $k_{21}$ are the rate constants for ethylene (1) or propylene (2) addition to a catalyst site where the last polymerized monomer is an ethylene ($k_{1X}$) or propylene ($k_{2X}$).

In Table I the ethylene-propylene reactivity rates $r_1$ and $r_2$ are listed for several metallocenes. It can be seen that with increased steric interaction at the monomer coordination site $r_1$ increases, i.e. the tendency for ethylene polymerization increases over propylene polymerization.

It can be seen from Table I that if one desires a blend comprising HDPE/ethylene-propylene copolymer one would select bis(pentamethylcyclopentadienyl)$ZrCl_2$ and bis(cyclopentadienyl)Ti diphenyl or dimethylsilyldicyclopentadienyl zirconium dichloride in ratios of 5:1 to 1:1 whereas if one desires a blend comprising LLDPE/ethylene-propylene copolymer one would select bis(cyclopentadienyl)Zr dimethyl or bis(methylcyclopentadienyl)$ZrCl_2$ and bis(cyclopentadienyl)Ti diphenyl or dimethylsilyldicyclopentadienyl $ZrCl_2$ in ratios of 10:1 to 1:1.

Desirably, the metallocene molar ratio will be 10:1 to 1:10. The specific metallocenes selected and their molar ratios are dependent upon the molecular composition desired for the component polymers and the overall composition desired for the blend. In general, the catalyst components used in a reactor blend catalyst mixture will each have r values which are different in order to produce final polymer compositions which comprise blends of two or more polymers.

TABLE I

| Catalyst | $r_1$ | $r_2$ |
|---|---|---|
| $Cp_2Ti{=}CH_2 \cdot Al(Me)_2Cl$ | 24 | 0.0085 |
| $Cp_2TiPh_2$ | 19.5±1.5 | 0.015±.002 |
| $Me_2SiCp_2ZrCl_2$ | 24±2 | 0.029±.007 |
| $Cp_2ZrCl_2$ | 48±2 | 0.015±.003 |
| $(MeCp)_2ZrCl_2$ | 60 | |
| $(Me_5Cp)_2ZrCl_2$ | 250±30 | .002±0.001 |
| $[Cp_2ZrCl]_2O$ | 50 | 0.007 |

The solvents used in the preparation of the catalyst system are inert hydrocarbons, in particular a hydrocarbon that is inert with respect to the catalyst system. Such solvents are well known and include, for example, isobutane, butane, pentane, hexane, heptane, octane, cyclohexane, methylcyclohexane, toluene and xylene.

The catalyst systems described herein are suitable for producing polymer product blends in solution, slurry or a gas phase polymerizations and over a wide range of temperatures and pressures. For example, such temperatures may be in the range of −60 to 280°C and especially in the range of 50 to 160°C. The pressures employed in the process of the present invention are those well known for example, in the range of 1 to 500 atmospheres (0.10 to 50.7 MPa) and greater.

In a solution phase polymerization the alumoxane and metallocene can be employed as a homogeneous catalyst system. The alumoxane is preferably dissolved in a suitable solvent, typically in inert hydrocarbon solvent such as toluene or xylene, in molar concentrations of 0.1 to 3.0, however greater or lesser amounts can be employed.

The soluble metallocenes can be converted to supported heterogeneous catalyst by depositing said metallocenes on typical catalyst supports such as, for example, silica, alumina and polyethylene. The solid catalysts in combination with an alumoxane can be usefully employed in slurry and gas phase olefin polymerizations.

After polymerization and deactivation of the catalyst, the product polymer blend can be recovered by processes well known in the art for removal of deactivated catalysts and solution. The solvents may be flashed off from the polymer solution and the polymer obtained extruded into water and cut into pellets or other suitable comminuted shapes.

Pigments, antioxidants and other additives, as is known in the art, may be added to the polymer.

The polymer product obtained in accordance with this invention will have a weight average molecular weight in the range of 500 to 2,000,000 and preferably 10,000 to 500,000. The component polymers in the reactor blend can have the same or different average molecular weights and comonomer composition; however, it is preferable for most end uses that the average molecular weights and comonomer composition be different.

Illustrative, but nonlimiting examples of reactor blends which can be produced in accordance with this

invention are HDPE/EPR copolymer, LLDPE/EPR copolymer, HDPE/LLDPE and HDPE/LLDPE/EPR copolymer blends. These polymers demonstrate superior properties such as for example impact resistance and tear strength and process more easily than the individual component polymers.

The polymers produced by the process of this present invention are capable of being fabricated into a wide variety of articles, as is known for blends of polyethylene and copolymers of ethylene and higher alpha-olefins. The present invention is illustrated by the following examples.

Examples

In the following examples the molecular weights were determined on a Water's Associates Model No. 150C GPC. The measurements were made by dissolving polymer samples in hot trichlorobenzene (TCB) and filtered. The GPC (Gel Permeation Chromotography) runs were performed at 145°C in TCB at 1.5 $cm^3$/min using two Shodex A80M/S columns of 9.4 mm internal diameter from Perkins Elmer Inc. 300 $cm^3$ of 3.1 percent solutions in TCB were injected and the chromotographic runs monitored at sensitivity equal −64 and scale factor equal 65. The samples were run in duplicate. The integration parameters were obtained with a Water's Associates data module. An antioxidant, N-phenyl-2-naphthylamine, was added to all samples.

The alumoxane was prepared in the following manner:

600 $cm^3$ of a 14.5% solution of trimethylaluminum (TMA) in heptane was added in 30 $cm^3$ increments at 5 minute intervals, with rapid stirring, to 200 $cm^3$ toluene in a Zipperclave reactor under nitrogen and maintained at 100°C. Each increment was immediately followed by the addition of 0.3 $cm^3$ water. The reactor was vented of methane after each addition. Upon completion of the addition, the reactor was stirred for 6 hours while maintaining the temperature at 100°C. The mixture, containing soluble alumoxane was allowed to cool to room temperature and settle. The clear solution containing the soluble alumoxane was separated by decantation from the solids.

Example 1(a)—Reactor blend

A 1-liter stainless steel pressure vessel, equipped with an incline blade stirrer, an external water jacket for temperature control, a septum inlet and vent line, and a regulated supply of dry ethylene, propylene and nitrogen, was dried and deoxygenated with a nitrogen flow. 400 $cm^3$ of dry, degassed toluene was introduced directly into the pressure vessel. 25 $cm^3$ of 0.64 molar (in total aluminum) alumoxane was injected into the vessel by a gas tight syringe through the septum inlet and the mixture was stirred at 1,200 rpm and 50°C for 5 minutes at zero (0) psig (O MPag) of nitrogen. 1.12 mg bis(cyclopentadienyl) titanium diphenyl dissolved in 2.0 $cm^3$ of dry, distilled toluene was injected through the septum inlet into the vessel. Similarly, 0.107 mg. bis(pentamethylcyclopentadienyl) zirconium dimethyl in 2.0 $cm^3$ dry, distilled toluene was injected. The solution was saturated with 200 $cm^3$ propylene at a pressure of 165 psig (1.14 MPag). Thereafter ethylene at 25 psig (0.17 MPag) was passed into the vessel for 60 minutes while maintaining the temperature at 50°C at which time the reaction was stopped by rapidly venting and cooling. The polymer product was evaporated to dryness, weighed and analyzed by GPC and IR. 62 g of a blend of weighed and analyzed by GPC and IR. 62 g of a blend of polyethylene and EPR copolymer which analyzed for 6 mole % propylene and having a $\overline{M}n$ of 16,500 and a $\overline{M}w$ of 41,800 was recovered.

Example 1(b) [comparison]—Use of one metallocene-bis(pentamethylcyclopentadienyl)zirconiumdimethyl

A 1-liter stainless steel pressure vessel, equipped with an incline blade stirrer, an external water jacket for temperature control, a septum inlet and vent line, and a regulated supply of dry ethylene, propylene and nitrogen, was dried and deoxygenated with a nitrogen flow. 400 $cm^3$ of dry, degassed toluene was introduced directly into the pressure vessel. 25 $cm^3$ of 0.64 molar (in total aluminum) alumoxane was injected into the vessel by a gas tight syringe through the septum inlet and the mixture was stirred at 1,200 rpm and 50°C for 5 minutes at zero (0) psig (0 MPag) of nitrogen. 0.122 mg bis(pentamethylcyclopentadienyl)zirconium dimethyl dissolved in 2.0 $cm^3$ of dry, distilled toluene was injected through the septum inlet into the vessel. Liquid propylene (200 $cm^3$) was added from a calibrated addition vessel resulting in a propylene pressure of 153 psig (35.5 MPag). Thereafter ethylene at 25 psig (0.17 MPag) was passed into the vessel for 90 minutes while maintaining the temperature at 50°C at which time the reaction was stopped by rapidly venting and cooling. 76 g of polyethylene which analyzed for 3.4% propylene and having a $\overline{M}n$ of 15,300 and a $\overline{M}w$ of 36,400 was recovered. The analysis was performed as in Example 1(a).

Example 1(c) [comparison]—Use of one metallocene-bis(cyclopentadienyl)titaniumdiphenyl

A 1-liter stainless steel pressure vessel, equipped with an incline blade stirrer, an external water jacket for temperature control, a septum inlet and vent line, and a regulated supply of dry ethylene, propylene and nitrogen, was dried and deoxygenated with a nitrogen flow. 400 $cm^3$ of dry, degassed toluene was introduced directly into the pressure vessel. 25 $cm^3$ of 0.64 molar (in total aluminum) alumoxane was injected into the vessel by a gas tight syringe through the septum inlet and the mixture was stirred at 1,200 rpm and 50°C for 5 minutes at zero (0) psig (0 MPag) of nitrogen. 1.04 mg bis(cyclopentadienyl)titaniumdiphenyl dissolved in 2.0 $cm^3$ of dry, distilled toluene was injected through the septum inlet into the vessel. Liquid propylene (200 $cm^3$) was added from a calibrated addition vessel resulting in a propylene pressure of 165 psig (1.14 MPag). Thereafter ethylene at 25 psig (0.17 MPag) was passed into the

vessel for 90 minutes while maintaining the temperature at 50°C at which time the reaction was stopped by rapidly venting and cooling. 14.4 g of polyolefin which analyzed for 65% ethylene and 35% propylene and having a $\overline{M}n$ of 45,400 and a $\overline{M}w$ of 137,000 was recovered. The analysis was performed as in Example 1(a).

Example 2—Use of two different metallocenes

A 1-liter stainless steel pressure vessel, equipped with an incline blade stirrer, an external water jacket for temperature control, a septum inlet and vent line, and a regulated supply of dry ethylene, propylene and nitrogen, was dried and deoxygenated with a nitrogen flow. 400 $cm^3$ of dry, degassed toluene was introduced directly into the pressure vessel. 10.0 $cm^3$ of 0.83 molar (in total aluminum) alumoxane was injected into the vessel by a gas tight syringe through the septum inlet and the mixture was stirred at 1,200 rpm and 80°C for 5 minutes at zero (0) psig (0 MPag) of nitrogen. 2.127 mg bis(pentamethylcyclopentadienyl) zirconium dichloride dissolved in 2.0 $cm^3$ of dry, distilled toluene was injected through the septum inlet into the vessel. Similarly, 0.2628 mg bis(methylcyclopentadienyl) zirconium dichloride in 0.25 $cm^3$ dry, distilled toluene was injected. The solution was saturated with propylene at a pressure of 111 psig (0.76 MPag) for 15 seconds. Thereafter ethylene at 15 psig (0.10 MPag) was passed into the vessel for 20 minutes while maintaining the temperature at 80°C and the pressure at 126 psig (0.87 MPag) at which time the reaction was stopped by rapidly venting and cooling. 18.0 g of a blend of PE and EPR copolymer analyzed for 7.1 mole % propylene and having a $\overline{M}n$ of 2,000 and a $\overline{M}w$ of 8,300 was recovered. A fractionation analysis was performed by stirring a 10 g portion of this solid product for one hour in 100 $cm^3$ of toluene. The slurry was filtered and washed with 10 $cm^3$ of fresh toluene. The copolymer in solution and the solid product were separately evaporated to dryness, weighed and analyzed by GPC and IR.

The soluble product (7.0 g) had a $\overline{M}n$ of 2,200 and a $\overline{M}w$ of 11,900 and analyzed for 30 mole % propylene. The insoluble fraction had an $\overline{M}n$ of 3000 and a $\overline{M}w$ of 7,400 and analyzed to contain 4.8% propylene.

Example 3

A 1-liter stainless steel pressure vessel, equipped with an incline blade stirrer, an external water jacket for temperature control, a septum inlet and vent line, and a regulated supply of dry ethylene, propylene and nitrogen, was dried and deoxygenated with a nitrogen flow. 400 $cm^3$ of dry, degassed toluene was introduced directly into the pressure vessel. 10 $cm^3$ of alumoxane (8.3 m moles in total aluminum) was injected into the vessel by a gas tight syringe through the septum inlet and the mixture was stirred at 1,200 rpm and 50°C for 5 minutes at zero (0) psig (0 MPag) of nitrogen. 0.539 mg bis(methylcyclopentadienyl) zirconium dimethyl dissolved in 2.0 $cm^3$ of dry, distilled toluene was injected through the septum inlet into the vessel. Similarly, 1.03 mg bis(pentamethylcyclopentadienyl) zirconium dichloride in 2.0 $cm^3$ dry, distilled toluene was injected. The solution was saturated with 200 $cm^3$ propylene at a pressure of 111 psig (0.76 MPag) for 15 seconds. Thereafter ethylene at 25 psig (0.17 MPag) ($C_3/C_2$ liquid ratio=16) was passed into the vessel for 20 minutes while maintaining the temperature at 50°C at which time the reaction was stopped by rapidly venting and cooling. 30.0 g of a blend of LLDPE and EP copolymer analyzed for 3.6% propylene and having a $\overline{M}n$ of 5,600 and a $\overline{M}w$ of 17,300 was recovered. The fractionation analysis, GPC & IR performed as in Example 2 yielded 3.0 g of a soluble fraction having a $\overline{M}n$ of 3,500, a $\overline{M}w$ of 16,000 and mole % of $C_3^=$ of 20.6. The insoluble fraction (7.0 g) had a $\overline{M}n$ of 5,400, a $\overline{M}w$ of 16,400 and mole % $C_3^=$ of 2.9%.

**Claims**

1. A catalyst system suitable for use in the production of reactor blend polymers comprising (a) at least two different metallocenes, being organometallic coordination compounds which are derivatives of mono, di or tricyclopentadienyls with Group 4b, 5b or 6b transition metal, the molar ratio of the metallocenes being between 100:1 and 1:100; and (b) an alumoxane.

2. A catalyst system according to claim 1 wherein the molar ratio of the metallocenes is between 10:1 and 1:10.

3. A catalyst system according to either of claims 1 and 2 wherein the metallocenes are represented by the general formula:

$$(C_5R'_m)_pR''_s(C_5R'_m)M\ Q_{3-p}$$

or

$$R''_s(C_5R'_m)_2M\ Q'$$

wherein $(C_5R'_m)$ is a cyclopentadienyl or substituted cyclopentadienyl, each R′ which can be the same or different is hydrogen or a hydrocarbyl radical or two R′ substituents together form a fused $C_4$—$C_6$ ring, R″ is a $C_1$—$C_4$ alkylene radical, a dialkyl germanium or silicone, or an alkyl phosphine or amine radical bridging two $(C_5R'_m)$ rings, Q is a hydrocarbon radical or halogen and can be the same or different, Q′ is an alkylidene radical having from 1 to 20 carbon atoms, M is a transition metal of Group 4b, 5b or 6b, s is 0 or 1, p is 0, 1 or 2; s is 0 when p is 0; m is 4 when s is 1; and m is 5 when s is 0.

4. A catalyst system according to claim 3 wherein Q is methyl, phenyl or chloride.

5. A catalyst system according to either of claims 3 and 4 wherein M is zirconium or titanium.

6. A catalyst system according to claim 5 comprising at least two zirconocenes.

7. A catalyst system according to claim 6 comprising bis(methylcyclopentadienyl) zirconium dichloride and bis(pentamethylcyclopentadienyl) zirconium dichloride.

8. A catalyst system according to claim 5 comprising at least one titanocene and one zirconocene.

9. A process for producing a reactor blend comprising polymerising ethylene and at least one alpha-olefin simultaneously in the presence of the catalyst system according to any of the preceding claims, the metallocenes having different reactivities with respect to the monomers employed.

10. A process according to claim 9 wherein the reactor blend comprises a blend of polyethylene and ethylene-propylene copolymer.

11. A process according to claim 10 wherein the polyethylene is LLDPE or HDPE.

12. A process according to claim 9 wherein the reactor blend comprises HDPE/EPR, LLDPE/EPR, HDPE/LLDPE or HDPE/LLDPE/EPR.

## Patentansprüche

1. Katalysatorsystem, das zur Verwendung bei der Herstellung von Reaktorpolymermischungen geeignet ist, enthaltend (a) mindestens zwei verschiedene metallorganische Verbindungen, die metallorganische Koordinationsverbindungen darstellen, die Derivate von Mono-, Di- oder Tricyclopentadienyl mit Übergangsmetallen der Gruppe IVb, Vb oder VIb sind, wobei das Molverhältnis der Organometallverbindungen zwischen 100:1 und 1:100 beträgt
und (b) ein Alumoxan.

2. Katalysatorsystem nach Anspruch 1, worin das Molverhältnis der metallorganischen Verbindungen zwischen 10:1 und 1:10 beträgt.

3. Katalysatorsystem nach einem der Ansprüche 1 und 2, worin die metallorganischen Verbindungen die folgende allgemeine Formel aufweisen:

$$(C_5R'_m)_pR''_s(C_5R'_m)M\ Q_{3-p}$$

oder

$$R''_s(C_5R'_m)_2M\ Q',$$

worin $(C_5R'_m)$ ein Cyclopentadienyl, oder ein substituiertes Cyclopentadienyl ist, jeder Rest R', der gleich oder verschieden sein kann, Wasserstoff oder einen Kohlenwasserstoffrest bedeutet oder zwei R'-Substituenten bilden zusammen einen $C_4$—$C_6$-Ring, R'' einen $C_1$—$C_4$-Alkylenrest, ein Dialkylgermanium oder -silizium oder ein Alkylphosphin oder einen Aminrest, der zwei $(C_5R'_m)$ Ringe miteinander verbindet, bedeutet, Q einen Kohlenwasserstoffrest oder ein Halogenatom bedeutet, wobei sie gleich oder verschieden sein können, Q' einen Alkylidenrest mit 1 bis 20 Kohlenstoffatomen bedeutet, M ein Übergangsmetall der Gruppe IVb, Vb oder VIb bedeutet, s 0 oder 1, p 0, 1 oder 2 ist; s ist 0, wenn p 0 ist; m ist 4, wenn s 1 ist; und m ist 5, wenn s 0 ist.

4. Katalysatorsystem nach Anspruch 3, worin Q Methyl, Phenyl oder Chlorid bedeutet.

5. Katalysatorsystem nach einem der Ansprüche 3 und 4, worin M Zirkonium oder Titan ist.

6. Katalysatorsystem nach Anspruch 5, das mindestens zwei zirkonium-metallorganische Verbindungen enthält.

7. Katalysatorsystem nach Anspruch 6, das bis-(Methylcyclopentadienyl)-zirkoniumdichlorid und bis-(Pentamethylcyclopentadienyl)-zirkoniumdichlorid enthält.

8. Katalysatorsystem nach Anspruch 5, das mindestens eine titanmetallorganische und eine zirkonium-metallorganische Verbindung enthält.

9. Verfahren zur Herstellung einer Reaktormischung, bei dem man Ethylen und mindestens ein alpha-Olefin gleichzeitig in Gegenwart des Katalysatorsystems nach einem der vorhergehenden Ansprüche polymerisiert, wobei die metallorganischen Verbindungen verschiedene Reaktivitäten, bezogen auf die eingesetzten Monomeren, aufweisen.

10. Verfahren nach Anspruch 9, worin die Reaktormischung eine Mischung aus Polyethylen und Ethylenpropylencopolymer enthält.

11. Verfahren nach Anspruch 10, worin das Polyethylen LLDPE oder HDPE ist.

12. Verfahren nach Anspruch 9, worin die Reaktormischung HDPE/EPR, LLDPE/EPR, HDPE/LLDPE oder HDPE/LLDPE/EPR enthält.

## Revendications

1. Système de catalyseur apte à être utilisé pour la production de mélanges en réacteur de polymères, comprenant (a) au moins deux métallocènes différents, composés organométalliques de coordination qui sont dérivés de mono-, di- ou tricyclopentadiényles avec un métal de transition du Groupe 4b, 5b ou 6b, le rapport molaire des métallocènes ayant une valeur comprise entre 100:1 et 1:100, et (b) un alumoxane.

2. Système de catalyseur suivant la revendication 1, dans lequel le rapport molaire des métallocènes se situe entre 10:1 et 1:10.

3. Système de catalyseur suivant l'une des revendications 1 et 2, dans lequel les métallocènes sont représentés par la formule générale:

$$(C_5R'_m)_pR''_s(C_5R'_m)M\ Q_{3-p}$$

ou

$$R''_s(C_5R'_m)_2M\ Q'$$

où $(C_5R'_m)$ est un groupe cyclopentadiényle ou cyclopentadiényle substitué, chacun des groupes R', qui peuvent être identiques ou différents, représente l'hydrogène ou un radical hydrocarbyle ou bien deux substituants R' forment conjointement un noyau condensé en $C_4$ à $C_6$, R''' est un radical alkylène en $C_1$ à $C_4$, un dialkylgermanium ou une silicone, ou un radical alkylphosphine ou amine pontant deux noyaux $(C_5R'_m)$, les groupes Q identiques ou différents représentent un radical hydrocarboné ou un halogène, Q' est un radical alkylidène ayant 1 à 20 atomes de carbone, M est un métal de transition du Groupe 4b, 5b ou 6b, s a la valeur 0 ou 1, p a la valeur 0, 1 ou 2; s est égal à 0 lorsque p est égal à 0; m est égal à 4 lorsque s est égal à 1; et m est égal à 5 lorsque s est égal à 0.

4. Système de catalyseur suivant la revendication 3, dans lequel Q est un radical méthyle, phényle ou chlorure.

5. Système de catalyseur suivant l'une des revendications 3 et 4, dans lequel M est le zirconium ou le titane.

6. Système de catalyseur suivant la revendication 5, comprenant au moins deux zirconocènes.

7. Système de catalyseur suivant la revendication 6, comprenant du dichlorure de bis(méthylcyclopentadiényl)zirconium et du dichlorure de bis(pentaméthylcyclopentadiényl)zirconium.

8. Système de catalyseur suivant la revendication 5, comprenant au moins un titanocène et un zirconocène.

9. Procédé de production d'un mélange en réacteur, consistant à polymériser de l'éthylène et au moins une alpha-oléfine simultanément en présence du système de catalyseur selon l'une quelconque des revendications précédentes, les métallocènes ayant des réactivités différentes par rapport aux monomères utilisés.

10. Procédé suivant la revendication 9, dans lequel le mélange en réacteur comprend un mélange de polyéthylène et d'un copolymère éthylène-propylène.

11. Procédé suivant la revendication 10, dans lequel le polyéthylène est un PELBD ou un PEHD.

12. Procédé suivant la revendication 9, dans lequel le mélange en réacteur est un mélange PEHD/EPR, PELBD/EPR, PEHD/PELBD ou PEHD/PELBD/EPR.